# EUROPEAN PATENT APPLICATION

(11) **EP 4 708 508 A1**
(43) Date of publication of application: **11.03.2026**
(21) Application number: 25811150.9
(22) Date of filing: 09.01.2025
(51) Int. Cl.: H01M 50/242, H01M 50/289, H01M 50/211, H01M 50/249

(54) **BATTERY PACK AND VEHICLE INCLUDING SAME**

(30) Priority: 28.05.2024 KR 20240069383
(71) Applicant: LG Energy Solution, Ltd., Seoul 07335 (KR)
(72) Inventor: LEE, Geum-Pyo, Daejeon 34122 (KR); KIM, Seung-Joon, Daejeon 34122 (KR); KIM, Jong-Jin, Daejeon 34122 (KR); PARK, Jin-Yong, Daejeon 34122 (KR); LEE, Chung-Ho, Daejeon 34122 (KR)
(74) Representative: Plasseraud IP
(86) International application number: PCT/KR2025/000537
(87) International publication number: WO 2025/249695

(57) **Abstract**

Disclosed is a battery pack and a vehicle including the same. The battery pack includes a plurality of battery cells; a pack case configured to accommodate the plurality of battery cells, so that at least a portion of the pack case is separated; a reinforcing member inserted into the separated portion of the pack case; and a connection member configured to connect the pack case and the reinforcing member.

## Description

### TECHNICAL FIELD

This application is based on and claims priority from Korean Patent Application No. 10-2024-0069383, filed on May 28, 2024, with the Korean Intellectual Property Office, the disclosure of which is incorporated herein in its entirety by reference.

The present disclosure relates to a battery pack and a vehicle including the same, and more specifically, to a battery pack capable of improving space utilization of the battery pack and increasing battery capacity, and a vehicle including the same.

### BACKGROUND ART

In general, a secondary battery refers to a battery that may be repeatedly charged and discharged, such as a lithium-ion battery, a lithium polymer battery, a nickel-cadmium battery, a nickel-hydrogen battery, or a nickel-zinc battery. A battery cell, which corresponds to the most basic secondary battery, may provide an output voltage of approximately 2.5 V to 4.2 V.

Recently, as these battery cells are applied to devices requiring high output voltage and large charging capacity, such as electric vehicles or ESS (Energy Storage Systems), a battery module configured by connecting a number of battery cells in series, parallel, or a combination of series and parallel, and a battery pack configured by connecting the battery modules again in series, parallel, or a combination of series and parallel, are widely used.

Lithium secondary batteries are currently in the spotlight due to their advantages such as high operating voltage and significantly high energy density. However, because they use organic electrolytes, overcharging of lithium secondary batteries may cause overcurrent and overheating, which may lead to explosion or ignition in severe cases.

Various types of secondary batteries include a battery module that includes a module case capable of protecting battery cells and a plurality of battery cells stacked and inserted into the module case, and a battery pack that includes a plurality of battery modules.

Recently, in the case of medium and large-sized battery packs applied to electric vehicles, etc., it has become important to include a large number of battery cells to increase battery capacity. However, in the conventional technology, there is a problem that it is not easy to increase battery capacity because the utilization rate of the limited space inside the pack case is low.

### DISCLOSURE

### Technical Problem

The present disclosure is directed to providing a battery pack capable of improving the space utilization of the battery pack and thus increasing the battery capacity, and a vehicle including the same.

In addition, the present disclosure is directed to providing a battery pack capable of maintaining rigidity even when the pack case is separated to improve space utilization of the battery pack, and a vehicle including the same.

In addition, the present disclosure is directed to providing a battery pack, which may be easily coupled by bolts even when welding is difficult, and a vehicle including the same.

However, the technical problems to be solved by the present disclosure are not limited to the above, and other problems not mentioned herein will be clearly understood by those skilled in the art from the following description.

### Technical Solution

In one aspect of the present disclosure, there is provided a battery pack comprising: a plurality of battery cells; a pack case configured to accommodate the plurality of battery cells, so that at least a portion of the pack case is separated; a reinforcing member inserted into the separated portion of the pack case; and a connection member configured to connect the pack case and the reinforcing member.

In an embodiment, the pack case may include a side frame, the side frame may include a first side frame; and a second side frame separated from the first side frame, and the reinforcing member may be arranged between the first side frame and the second side frame.

In an embodiment, the connection member may include a connection portion coupled to the first side frame, the reinforcing member, and the second side frame; and a fastening portion configured to fasten the connection portion.

In an embodiment, the connection portion may have a fastening groove formed thereon, the fastening portion may be a bolt fastened to the fastening groove, and the bolt may include a first bolt configured to fasten the first side frame and the connection portion; a second bolt configured to fasten the reinforcing member and the connection portion; and a third bolt configured to fasten the second side frame and the connection portion.

In an embodiment, the pack case may include a barrier frame, the barrier frame may include a first barrier frame; and a second barrier frame separated from the first barrier frame, and the reinforcing member may be arranged between the first barrier frame and the second barrier frame.

In an embodiment, the connection member may include a connection portion coupled to the first barrier frame, the reinforcing member, and the second barrier frame; and a fastening portion configured to fasten the connection portion.

In an embodiment, the connection portion may have a fastening groove formed thereon, the fastening portion may be a bolt fastened to the fastening groove, and the bolt may include a first bolt configured to fasten the first barrier frame and the connection portion; a second bolt configured to fasten the reinforcing member and the connection portion; and a third bolt configured to fasten the second barrier frame and the connection portion.

In an embodiment, the pack case may include a plurality of barrier frames, and the plurality of battery cells may be arranged between the plurality of barrier frames.

In an embodiment, the plurality of barrier frames may be arranged in only one of a horizontal direction and a vertical direction.

In an embodiment, the pack case may include a plurality of side frames, the plurality of side frames may include a long side frame having a long length; and a short side frame having a short length, and the barrier frame may be arranged only in a direction parallel to the short side frame.

In an embodiment, the pack case may include a lower frame, the battery pack may comprise a support member coupled to the lower frame, and the barrier frame may be coupled to the support member.

In an embodiment, one barrier frame among the plurality of barrier frames may include a first barrier member located at one side; and a second barrier member coupled to the first barrier member.

In an embodiment, the first barrier member may include a first plate arranged in a vertical direction; and a first support coupled to an upper side of the first plate.

In an embodiment, the second barrier member may include a second plate arranged in the vertical direction; and a second support coupled to a middle portion of the second plate.

In an embodiment, the first plate and the second plate may be arranged to face each other, and the first support may be in contact with the second support at an upper side of the second support.

In an embodiment, the support member may be arranged between the first plate and the second plate and may be in contact with the second support.

Meanwhile, according to another aspect of the present disclosure, there may be provided a vehicle including at least one battery pack described above.

### Advantageous Effects

The embodiments of the present disclosure have the effect of improving the space utilization of a battery pack and thereby increasing the battery capacity.

In addition, there is an effect of maintaining rigidity even when the pack case is separated to improve space utilization of the battery pack.

In addition, there is an effect that allows easy coupling by bolts even in cases where welding is difficult.

The accompanying drawings illustrate a preferred embodiment of the present disclosure and together with the foregoing disclosure, serve to provide further understanding of the technical features of the present disclosure, and thus, the present disclosure is not construed as being limited to the drawing.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a perspective view showing a battery pack according to an embodiment of the present disclosure as a whole.
FIG. 2 is a plan view showing only a portion of the battery pack according to an embodiment of the present disclosure.
FIG. 3 is an enlarged view showing a part A of FIG. 1, in which a bolt is separated from a fastening groove of a connection portion.
FIG. 4 is a diagram in which some battery cells and a barrier frame are removed in FIG. 1.
FIG. 5 is a diagram in which the battery cell is removed, but the barrier frame is depicted in FIG. 1.
FIG. 6 shows that a portion of the barrier frame is separated in FIG. 1.
FIG. 7 is a perspective view showing the barrier frame provided in the battery pack according to an embodiment of the present disclosure.
FIG. 8 is a diagram viewed along the direction of arrow B in FIG. 7.
FIG. 9 is an exploded perspective view showing the barrier frame provided in the battery pack according to an embodiment of the present disclosure.
FIG. 10 is a drawing for illustrating a vehicle including the battery pack according to each embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the disclosure, so it should be understood that other equivalents and modifications could be made thereto without departing from the scope of the disclosure.

In the drawings, the size of each component or a specific portion constituting the component is exaggerated, omitted, or schematically illustrated for convenience and clarity of description. Therefore, the size of each component does not fully reflect the actual size. If it is determined that a detailed description of a related known function or configuration may unnecessarily obscure the gist of the present disclosure, such a description will be omitted.

As used herein, the term 'coupling' or 'connection' refers to not only a case where one member and another member are directly coupled or directly connected, but also a case where one member is indirectly coupled or indirectly connected to another member through a joint member.

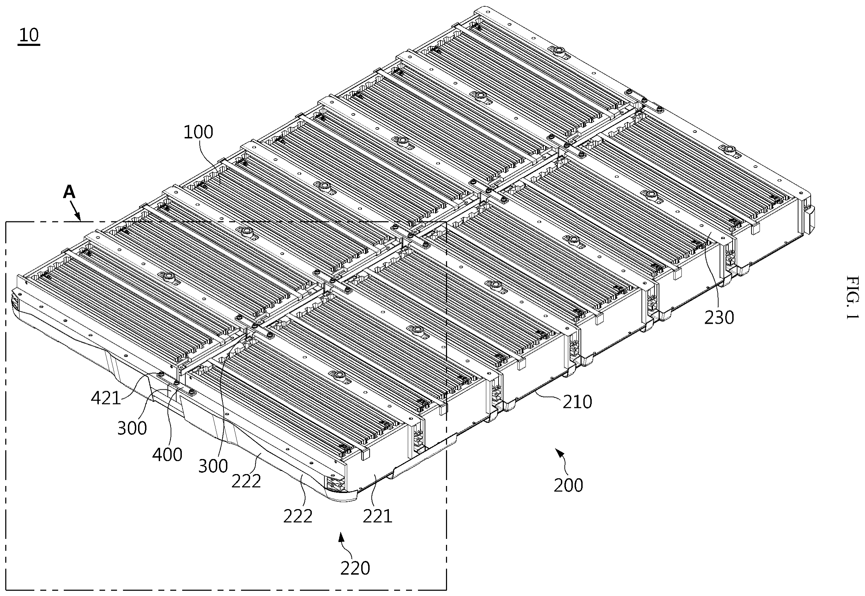

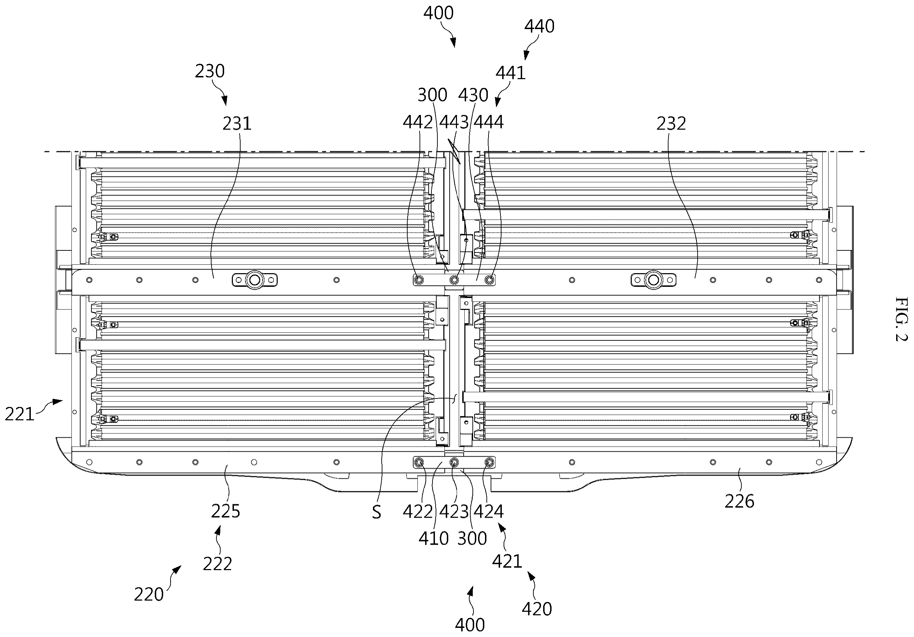

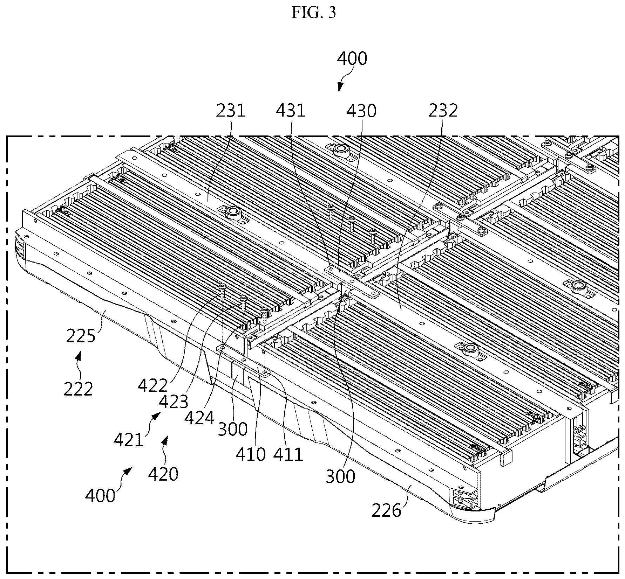

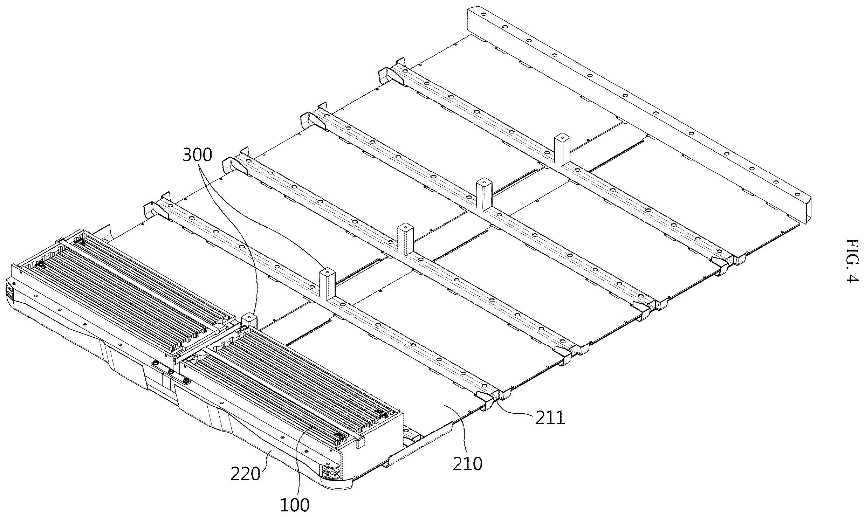

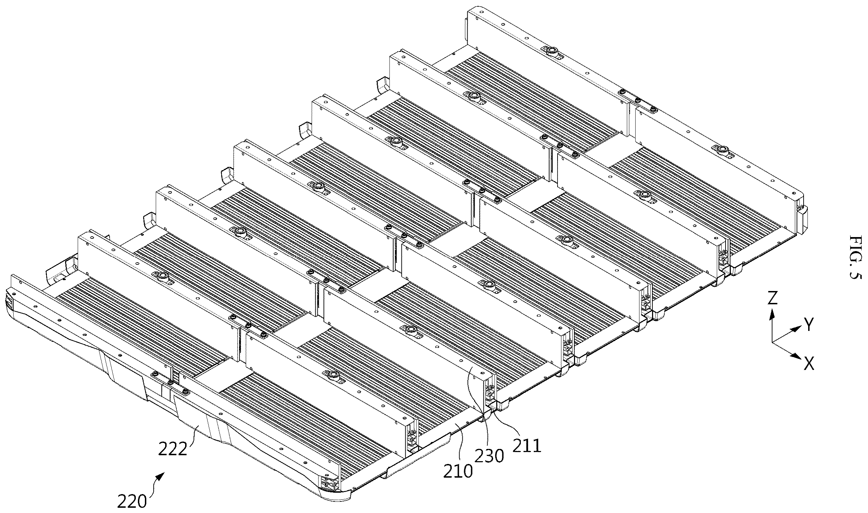

FIG. 1 is a perspective view showing a battery pack according to an embodiment of the present disclosure as a whole, FIG. 2 is a plan view showing only a portion of the battery pack according to an embodiment of the present disclosure, FIG. 3 is an enlarged view showing a part A of FIG. 1, in which a bolt is separated from a fastening groove of a connection portion, FIG. 4 is a diagram in which some battery cells and a barrier frame are removed in FIG. 1, and FIG. 5 is a diagram in which the battery cell is removed, but the barrier frame is depicted in FIG. 1.

Referring to the drawings, a battery pack 10 according to an embodiment of the present disclosure may be configured to include a plurality of battery cells 100, a pack case 200, a reinforcing member 300, and a connection member 400.

The types of battery cell 100 may be diverse. For example, the battery cell 100 may include at least one of a pouch-type battery cell, a cylindrical battery cell, and a rectangular battery cell. However, for convenience of explanation, the following description focuses on the case where the battery cell 100 is a pouch-type battery cell.

The plurality of battery cells 100 may be stacked. The battery cells 100 may have various structures, and further, the plurality of battery cells 100 may be stacked in various ways.

The battery cell 100 may have a structure in which a plurality of unit cells, in each of which a positive electrode plate, a separator and a negative electrode plate are arranged in the order, or a plurality of bi-cells, in each of which a positive electrode plate, a separator, a negative electrode plate, a separator, a positive electrode plate, a separator and a negative electrode plate are arranged in the order, are stacked according to the battery capacity.

The battery cell 100 may be equipped with an electrode lead. The electrode lead is a type of terminal that is exposed to the outside and connected to an external device, and a conductive material may be used. The electrode lead may include a positive electrode lead and a negative electrode lead.

The positive electrode lead and the negative electrode lead may be arranged in opposite directions with respect to the longitudinal direction of the battery cell 100, or the positive electrode lead and the negative electrode lead may be arranged in the same direction with respect to the longitudinal direction of the battery cell 100.

For example, the battery cell 100 may be accommodated in a module case (not shown), and the module case containing the battery cell 100 may be accommodated in the pack case 200 to form a battery pack 10. However, the present disclosure is not limited thereto, and the module case may be removed to reduce the weight and volume, and in this case, the battery cell 100 may be directly accommodated in the pack case 200 of the battery pack 10.

According to this method, more battery cells 100 may be accommodated in the space previously occupied by the module case of the battery module within the battery pack 10, thereby increasing space efficiency and improving battery capacity.

Hereinafter, for convenience of explanation, the following description focuses on a case where the battery cell 100 is directly accommodated in the pack case 200 without a module case. However, an embodiment using a module case is not completely excluded, and if necessary, the pouch-type battery cell 100 of each embodiment of the present disclosure may be configured to be accommodated in the module case provided in the battery module.

Here, a cell cover (not shown) may be provided to support the battery cell 100 so that the battery cell 100 may be directly accommodated in the pack case 200. The cell cover may have various shapes, and may be configured in, for example, an 'n' shape, a 'u' shape, or a '⊂' shape surrounding at least three sides of one battery cell 100. However, the present disclosure is not limited thereto.

In addition, the battery pack 10 according to this embodiment may include, for example, a control module configured to control charging and discharging of the pouch-type battery cell 100. The control module may include, for example, a battery management system (BMS) and a battery blocking unit, and may be accommodated inside the pack case 200 together with the battery cell 100 and the cell cover.

Referring to FIG. 1, a plurality of battery cells 100 are accommodated in the pack case 200, and at least a portion of the pack case 200 is separated.

The pack case 200 may be configured to include, for example, a lower frame 210, a side frame 220, and a barrier frame 230. Here, the pack case 200 may include a plurality of side frames 220. In addition, the pack case 200 may include a plurality of barrier frames 230.

The lower frame 210 is configured such that a plurality of battery modules are placed thereon. The lower frame 210 may be formed in a rectangular plate shape, but is not limited thereto. The lower frame 210 forms the bottom of the pack case 200.

The side frame 220 may be configured to extend upward from an edge of the lower frame 210. The side frame 220 defines the height of the pack case 200 and forms a preset space between the side frame 220 and the lower frame 210.

Also, a plurality of battery cells 100 are mounted in the space between the side frame 220 and the lower frame 210. The side frame 220 may be provided in plurality, and referring to FIGS. 1 and 2, the plurality of side frames 220 may include a long side frame 221 having a relatively long length and a short side frame 222 having a relatively short length. Alternatively, the lengths of the side frames 220 may all be the same.

If the side frame 220 is provided in plurality, one side frame 220 among the plurality of side frames 220 may include a first side frame 225 and a second side frame 226. Referring to FIG. 2, the short side frame 222 is configured to include the first side frame 225 and the second side frame 226, but is not limited thereto, and the long side frame 221 may also be configured to include the first side frame 225 and the second side frame 226. In this case, the shape and arrangement of the barrier frame 230 may be different. However, for convenience of explanation, the following description will focus on a case where the short side frame 222 includes the first side frame 225 and the second side frame 226.

The first side frame 225 and the second side frame 226 are separated from each other. Here, the first side frame 225 and the second side frame 226 may be formed symmetrically to each other, but are not necessarily limited thereto.

In addition, a reinforcing member 300 may be disposed between the first side frame 225 and the second side frame 226. Here, the connection member 400 may connect the first side frame 225, the reinforcing member 300, and the second side frame 226. The connection member 400 will be described in detail later.

Referring to FIGS. 1 and 3, the barrier frame 230 is coupled to the side frame 220 and the lower frame 210. In addition, the barrier frame 230 may be provided in plurality, and the plurality of battery cells 100 may be arranged between the plurality of barrier frames 230. That is, the barrier frame 230 is interposed between the plurality of battery cells 100.

Referring to FIG. 2, if the barrier frame 230 is provided in plurality, one barrier frame 230 among the plurality of barrier frames 230 may include a first barrier frame 231 and a second barrier frame 232.

Also, the first barrier frame 231 and the second barrier frame 232 are separated from each other. The adjacent battery cells 100 are separated from each other to prevent short circuits due to various terminals, and correspondingly, the first barrier frame 231 and the second barrier frame 232 may also be separated. Here, the first barrier frame 231 and the second barrier frame 232 may be formed symmetrically to each other, but are not necessarily limited thereto.

In addition, the reinforcing member 300 may be disposed between the first barrier frame 231 and the second barrier frame 232. Here, the connection member 400 may connect the first barrier frame 231, the reinforcing member 300, and the second barrier frame 232. The connection member 400 will be described in detail later.

The barrier frame 230 may be arranged in only one direction. For example, if the side frame 220 includes a long side frame 221 and a short side frame 222, the plurality of barrier frames 230 may be arranged in only one of the horizontal direction and the vertical direction.

Of course, even if the lengths of all side frames 220 are the same, the plurality of barrier frames 230 may be arranged in only one of the horizontal direction and the vertical direction. However, for convenience of explanation, the following description will focus on a case where the side frame 220 includes a long side frame 221 and a short side frame 222.

For example, referring to FIGS. 1 and 5 together, the barrier frame 230 is arranged only in a direction parallel to the X direction based on FIG. 5, and is not arranged in a direction parallel to the Y direction. That is, the barrier frame 230 may be arranged only in a direction parallel to the short side frame 222, and is not arranged in a direction parallel to the long side frame 221.

Referring to FIG. 2, since the battery cells 100 may also be arranged in a space S (for example, a space formed in the center parallel to the long side frame 221 between neighboring barrier frames 230 arranged to face each other in a direction parallel to the short side frame 222) in which the barrier frames 230 may be arranged in a direction parallel to the long side frame 221, more battery cells 100 can be arranged compared to a conventional battery pack 10, thereby improving space utilization of the battery pack 10 and thus increasing battery capacity.

However, in order to prevent short circuits between various terminals connected to the battery cell 100, a certain amount of space is required between the battery cells 100, but this space may be much narrower than the space of the prior art occupied by the barrier frame 230 arranged in a direction parallel to the long side frame 221, so there is an effect of improving the space utilization mentioned above.

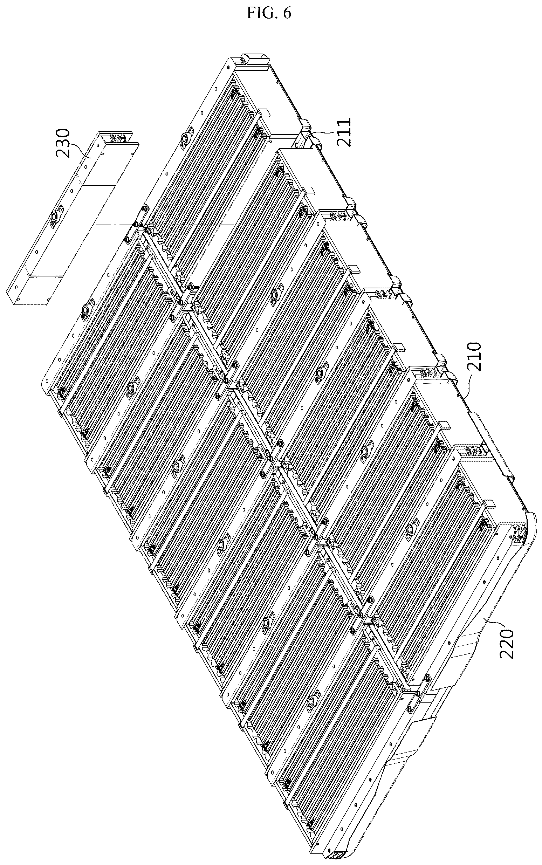

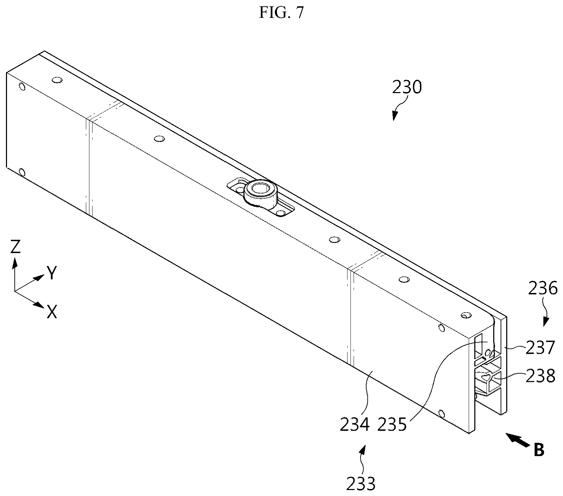

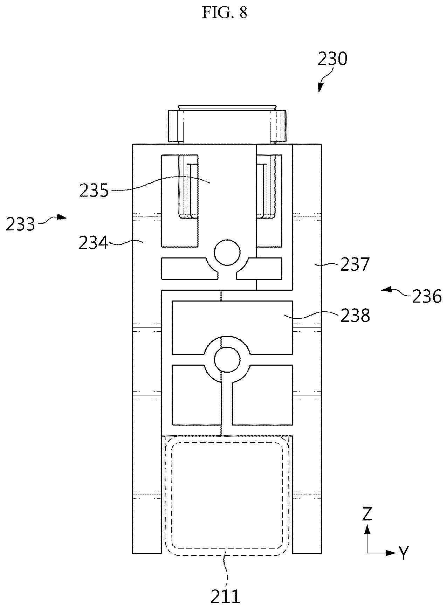

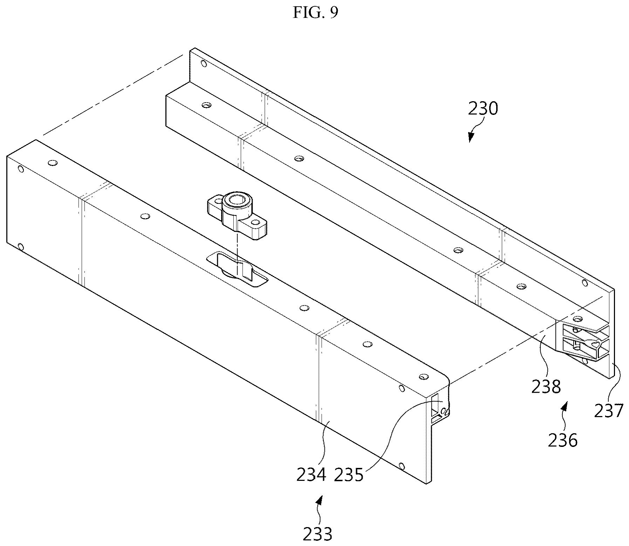

FIG. 6 shows that a portion of the barrier frame is separated in FIG. 1, FIG. 7 is a perspective view showing the barrier frame provided in the battery pack according to an embodiment of the present disclosure, FIG. 8 is a diagram viewed along the direction of arrow B in FIG. 7, and FIG. 9 is an exploded perspective view showing the barrier frame provided in the battery pack according to an embodiment of the present disclosure.

Referring to FIGS. 6 to 9, the barrier frame 230 may be configured to include a first barrier member 233 and a second barrier member 236.

The first barrier member 233 is located at one side. In FIG. 8, the first barrier member 233 is located at the left side based on FIG. 8 (left side based on the Y direction of FIG. 8), but the first barrier member 233 may also be located at the right side based on FIG. 8. In other words, the side where the first barrier member 233 is located may correspond to both the left and right sides.

The first barrier member 233 may include a first plate 234 and a first support 235. The first plate 234 may be arranged in a vertical direction (Z direction of FIG. 8) based on to FIG. 8. Also, the first support 235 may be coupled to an upper side of the first plate 234 (see FIG. 9).

The second barrier member 236 is coupled to the first barrier member 233. The second barrier member 236 is located at the other side of the first barrier member 233. In FIG. 8, the second barrier member 236 is located at the right side based on FIG. 8 (the right side in the Y direction of FIG. 8), but the second barrier member 236 may also be located at the left side based on FIG. 8. In other words, the other side where the second barrier member 236 is located may correspond to both the right and the left.

The second barrier member 236 may include a second plate 237 and a second support 238. The second plate 237 may be arranged in a vertical direction (Z direction of FIG. 8) based on FIG. 8. In addition, the second support 238 may be coupled to a middle portion of the second plate 237 (see FIG. 9).

Referring to FIGS. 7 and 8, the first plate 234 and the second plate 237 may be arranged to face each other. In addition, if the first plate 234 and the second plate 237 are arranged to face each other, the first support 235 may be configured to contact the second support 238 at the upper side of the second support 238.

Here, the first barrier member 233 and the second barrier member 236 may be coupled by a bolt (not shown).

In addition, referring to FIGS. 4 and 6 together, the barrier frame 230 may be coupled to the support member 211. Here, the support member 211 may be coupled to the lower frame 210 of the pack case 200, and referring to FIG. 5, the barrier frame 230 may be coupled to and supported by the support member 211.

For example, referring to FIGS. 6 and 8 together, the support member 211 may be positioned between the first plate 234 and the second plate 237 and may be in contact with the second support 238, and the second support 238 and the support member 211 may be coupled by fastening using a bolt (not shown).

In particular, even if the lower frame 210 or the barrier frame 230 is made of a material that is difficult to weld, the first barrier member 233 and the second barrier member 236 are fastened by a bolt, and the second support 238 and the support member 211 are also fastened by a bolt, which allows easy coupling.

That is, as described above, the first barrier member 233 includes a first plate 234 and a first support 235, the second barrier member 236 includes a second plate 237 and a second support 238, the first support 235 is in contact with the second support 238 at the upper side of the second support 238 and is fastened by a bolt, and the support member 211 is in contact with the second support 238 so that the second support 238 and the support member 211 are fastened by a bolt, which provides an effect that enables coupling with each other even when welding is difficult.

Referring to FIGS. 2 and 3, the reinforcing member 300 is inserted into a separated portion of the pack case 200. For example, the reinforcing member 300 may be arranged between the first side frame 225 and the second side frame 226 of the side frame 220, or may be arranged between the first barrier frame 231 and the second barrier frame 232 of the barrier frame 230.

The reinforcing member 300 reinforces the connection member 400 when the connection member 400 connects the first side frame 225 and the second side frame 226, or reinforces the connection member 400 when the connection member 400 connects the first barrier frame 231 and the second barrier frame 232.

Here, the reinforcing member 300 may be formed to have the same height as the first side frame 225 and the second side frame 226, or may be formed to have the same height as the first barrier frame 231 and the second barrier frame 232.

The connection member 400 connects pack case 200 and reinforcing member 300. The connection member 400 may connect the side frame 220 or may connect the barrier frame 230.

Referring to FIG. 2, when the connection member 400 connects the side frame 220, the connection member 400 may include a connection portion 410 and a fastening portion 420. Here, the connection portion 410 is coupled to the first side frame 225, the reinforcing member 300, and the second side frame 226. In addition, a fastening groove 411 (see FIG. 3) may be formed on the connection portion 410.

In addition, the fastening portion 420 fastens the connection portion 410. The fastening portion 420 may be diverse, and may include, for example, a bolt 421 fastened to the fastening groove 411 of the connection portion 410. Here, the bolt 421 may include a first bolt 422, a second bolt 423, and a third bolt 424.

The first bolt 422 fastens the first side frame 225 and the connection portion 410. Also, the second bolt 423 fastens the reinforcing member 300 and the connection portion 410. In addition, the third bolt 424 fastens the second side frame 226 and the connection portion 410.

If the connection member 400 connects the first side frame 225 of the side frame 220, the reinforcing member 300, and the second side frame 226 in this way, there is an effect of maintaining rigidity even when the pack case 200 is separated to improve the space utilization of the battery pack 10.

In addition, referring to FIG. 2, when the connection member 400 connects the barrier frame 230, the connection member 400 may include a connection portion 430 and a fastening portion 440. Here, the connection portion 430 is coupled to the first barrier frame 231, the reinforcing member 300, and the second barrier frame 232. Also, a fastening groove 431 (refer to FIG. 3) may be formed on the connection portion 430.

In addition, the fastening portion 440 fastens the connection portion 430. The fastening portion 440 may be diverse, and may include, for example, a bolt 441 fastened to the fastening groove 431 of the connection portion 430. Here, the bolt 441 may include a first bolt 442, a second bolt 443, and a third bolt 444.

The first bolt 442 fastens the first barrier frame 231 and the connection portion 430. Also, the second bolt 443 fastens the reinforcing member 300 and the connection portion 430. In addition, the third bolt 444 fastens the second barrier frame 232 and the connection portion 430.

If the connection member 400 connects the first barrier frame 231 of the barrier frame 230, the reinforcing member 300, and the second barrier frame 232 in this way, there is an effect of maintaining rigidity even when the pack case 200 is separated to improve the space utilization of the battery pack 10.

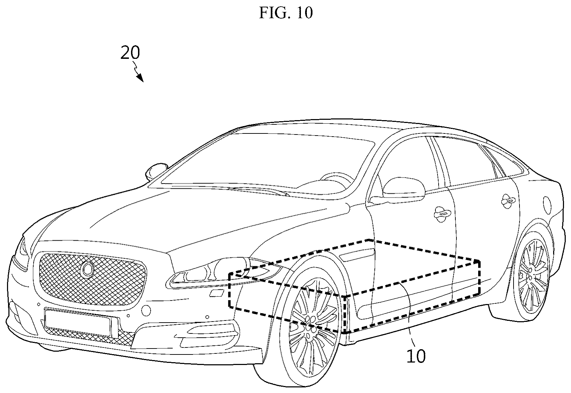

FIG. 10 is a drawing for illustrating a vehicle including the battery pack according to each embodiment of the present disclosure.

Referring to FIG. 10, the vehicle 20 according to an embodiment of the present disclosure may include one or more battery packs 10 according to each of the embodiments described above. Here, the vehicle 20 includes various vehicles that are designed to use electricity, such as an electric vehicle or a hybrid electric vehicle.

When the terms indicating directions as used herein such as upper, lower, left, and right are used for convenience of description only, these terms are just for convenience of explanation, and it is obvious to those skilled in the art that the terms may change depending on the position of the stated element or an observer.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description. Therefore, the previously disclosed embodiments should be considered from an explanatory perspective rather than a limiting perspective. In other words, the scope of the true technical idea of the present disclosure is shown in the claims, and all differences within the scope of equivalence should be interpreted as being included in the present disclosure.

### INDUSTRIAL APPLICABILITY

The present disclosure relates to a battery pack and a vehicle including the same, and is particularly applicable to industries related to secondary batteries.

## Claims

1. A battery pack comprising:
a plurality of battery cells;
a pack case configured to accommodate the plurality of battery cells, so that at least a portion of the pack case is separated;
a reinforcing member inserted into the separated portion of the pack case; and
a connection member configured to connect the pack case and the reinforcing member.

2. The battery pack according to claim 1,
wherein the pack case includes a side frame,
wherein the side frame includes:
a first side frame; and
a second side frame separated from the first side frame,
wherein the reinforcing member is arranged between the first side frame and the second side frame.

3. The battery pack according to claim 2,
wherein the connection member includes:
a connection portion coupled to the first side frame, the reinforcing member, and the second side frame; and
a fastening portion configured to fasten the connection portion.

4. The battery pack according to claim 3,
wherein the connection portion has a fastening groove formed thereon,
wherein the fastening portion is a bolt fastened to the fastening groove,
wherein the bolt includes:
a first bolt configured to fasten the first side frame and the connection portion;
a second bolt configured to fasten the reinforcing member and the connection portion; and
a third bolt configured to fasten the second side frame and the connection portion.

5. The battery pack according to claim 1,
wherein the pack case includes a barrier frame,
wherein the barrier frame includes:
a first barrier frame; and
a second barrier frame separated from the first barrier frame,
wherein the reinforcing member is arranged between the first barrier frame and the second barrier frame.

6. The battery pack according to claim 5,
wherein the connection member includes:
a connection portion coupled to the first barrier frame, the reinforcing member, and the second barrier frame; and
a fastening portion configured to fasten the connection portion.

7. The battery pack according to claim 6,
wherein the connection portion has a fastening groove formed thereon,
wherein the fastening portion is a bolt fastened to the fastening groove,
wherein the bolt includes:
a first bolt configured to fasten the first barrier frame and the connection portion;
a second bolt configured to fasten the reinforcing member and the connection portion; and
a third bolt configured to fasten the second barrier frame and the connection portion.

8. The battery pack according to claim 1,
wherein the pack case includes a plurality of barrier frames, and
wherein the plurality of battery cells are arranged between the plurality of barrier frames.

9. The battery pack according to claim 8,
wherein the plurality of barrier frames are arranged in only one of a horizontal direction and a vertical direction.

10. The battery pack according to claim 9,
wherein the pack case includes a plurality of side frames,
wherein the plurality of side frames include:
a long side frame having a long length; and
a short side frame having a short length,
wherein the barrier frame is arranged only in a direction parallel to the short side frame.

11. The battery pack according to claim 8,
wherein the pack case includes a lower frame,
wherein the battery pack comprises a support member coupled to the lower frame, and
wherein the barrier frame is coupled to the support member.

12. The battery pack according to claim 11,
wherein one barrier frame among the plurality of barrier frames includes:
a first barrier member located at one side; and
a second barrier member coupled to the first barrier member.

13. The battery pack according to claim 12,
wherein the first barrier member includes:
a first plate arranged in a vertical direction; and
a first support coupled to an upper side of the first plate.

14. The battery pack according to claim 13,
wherein the second barrier member includes:
a second plate arranged in the vertical direction; and
a second support coupled to a middle portion of the second plate.

15. The battery pack according to claim 14,
wherein the first plate and the second plate are arranged to face each other, and
wherein the first support is in contact with the second support at an upper side of the second support.

16. The battery pack according to claim 15,
wherein the support member is arranged between the first plate and the second plate and is in contact with the second support.

17. A vehicle comprising the battery pack according to any one of claims 1 to 16.
